Europäisches Patentamt

(19) European Patent Office

Office européen des brevets

(11) EP 0 826 716 A2

(12) **EUROPEAN PATENT APPLICATION**

(43) Date of publication:
04.03.1998 Bulletin 1998/10

(51) Int. Cl.⁶: $C08G\ 73/06$, $C08G\ 69/10$

(21) Application number: 97114462.1

(22) Date of filing: 21.08.1997

(84) Designated Contracting States:
AT BE CH DE DK ES FI FR GB GR IE IT LI LU MC NL PT SE

(30) Priority: 23.08.1996 JP 222367/96
28.08.1996 JP 226891/96

(71) Applicant:
Mitsubishi Chemical Corporation
Chiyoda-ku, Tokyo (JP)

(72) Inventors:
• Nakato, Takeshi,
c/o MITSUBISHI CHEM. CORP.
Inashiki-gun, Ibaraki (JP)
• Tomida, Masayuki,
c/o MITSUBISHI CHEM. CORP.
Inashiki-gun, Ibaraki (JP)

(74) Representative:
Hansen, Bernd, Dr. Dipl.-Chem. et al
Hoffmann Eitle,
Patent- und Rechtsanwälte,
Arabellastrasse 4
81925 München (DE)

(54) **Amine-modified polyaspartic acid or salt thereof and process for preparing the same**

(57) Amine-modified polyaspartic acid or a salt thereof having a calcium chelating ability exceeding 5.0 ($Ca^{++}g/100$ g-polymer) or a moisture absorption of 1 to 27% and a moisture retention exceeding 29%, which is obtained by causing a mixture comprising aspartic acid and/or polysuccinimide, an amine compound having a primary or secondary amino group, and an acidic compound to react while maintaining the mixture in a solid state to obtain amine-modified polysuccinimide and hydrolyzing the amine-modified polysuccinimide.

EP 0 826 716 A2

**Description**

FIELD OF THE INVENTION

This invention relates to amine-modified polyaspartic acid or a salt thereof and a process for preparing the same. The amine-modified polyaspartic acid or a salt thereof according to the present invention is useful as a chelating agent, a fertilizer, a scale inhibitor, a detergent, a humectant, a dispersant for pigments and minerals, and an additive to water in boilers and cooling towers.

BACKGROUND OF THE INVENTION

Polyaspartic acid has been used hitherto as a chelating agent, a fertilizer, a scale inhibitor, a detergent, a humectant, a dispersant for pigments and minerals, and an additive to water in boilers and cooling towers. Polyaspartic acid is usually obtained by hydrolyzing polysuccinimide. Known processes for producing polysuccinimide include a solid phase reaction of aspartic acid or maleamic acid at a high temperature of 180°C or higher (U.S. Patents 5,057,597, 5,219,986, and 5,315,010, and JP-A-6-206937 (the term "JP-A" as used herein means an "unexamined published Japanese patent application"), a solid phase reaction of ammonia and maleic anhydride at or above 120°C (U.S. Patents 4,839,461 and 5,296,578), and a reaction of aspartic acid or maleamic acid at or above 120°C in the presence of a solvent, such as polyethylene glycol, N-methylpyrrolidone or sulfolane (JP-A-6-145350 and JP-A-6-211982). In these processes, the reaction should be carried out at a high temperature for a long period of time in order to increase the conversion, i.e., the yield. Besides, polyaspartic acid obtained by these processes is inferior in calcium ion chelating ability and moisture retention.

A solid phase reaction of aspartic acid in the presence of a phosphoric acid or polyphosphoric acid catalyst at 100 to 250°C (JP-B-48-20638 and U.S. Patent 5,142,062, the term "JP-B" as used herein means an "examined published Japanese patent application") is known as a process for obtaining polysuccinimide in a short time. However, the process is disadvantageous in that: the catalyst should be used in a large amount so that a troublesome step is required for removing the catalyst after the reaction; the apparatus used for the reaction is required to have anticorrosion; and it is difficult to control the molecular weight of polysuccinimide produced. In addition, where the reaction is conducted in a solid phase, the produced polymer becomes a mass during polymerization, making it difficult to produce the polymer on an industrial scale.

On the other hand, it is known that amine-modified polysuccinimide, which is a precursor of amine-modified polyaspartic acid, is synthesized on an industrial scale by reacting aspartic acid or maleic acid and ammonia with a polyamine in a solid phase at high temperatures of 120°C or higher as disclosed in U.S. Patents 5,286,810, 5,391,642, and 5,466,760. However, these known processes are disadvantageous in that: the conversion to polysuccinimide is low, or a high reaction temperature and a long reaction time are needed; and the resulting amine-modified polysuccinimide has a relatively low molecular weight so that the amine-modified polyaspartic acid obtained therefrom by hydrolysis is insufficient in calcium chelating ability and moisture retention for exhibiting the performance as a polymer.

Processes for obtaining amine-modified polysuccinimide by reacting polysuccinimide and an amine are disclosed in J. Med. Chem., Vol. 16, Vol. 8, p. 893 (1973), U.S. Patents 4,363,797 and 5,175,285, and JP-B-48-20638. In these processes, polysuccinimide is dissolved in an aprotic polar solvent and reacted with an amine to obtain amine-modified polysuccinimide. However, these processes are disadvantageous in that an expensive solvent is used and that the solvent must be removed after the reaction.

SUMMARY OF THE INVENTION

The amine-modified polyaspartic acid is useful as a chelating agent, a fertilizer, a scale inhibitor, a detergent, a humectant, a dispersant for pigments and minerals, and an additive to water in boilers and cooling towers. Further, they have been attracting attention as a substitute for polyacrylic acid because of its biodegradability.

Therefore, an object of the present invention is to provide an amine-modified polyaspartic acid easily at a high conversion.

Another object of the present invention is to provide amine-modified polyaspartic acid which has high calcium chelating ability and high moisture retention.

The above objects are accomplished by a process comprising causing a mixture comprising aspartic acid and/or polysuccinimide, an amine compound having a primary or secondary amino group, and an acidic compound to react while maintaining the mixture in a solid state to obtain an amine-modified polysuccinimide and hydrolyzing the amine-modified polysuccinimide in a conventional manner.

DETAILED DESCRIPTION OF THE INVENTION

In the present invention, aspartic acid and/or polysuccinimide and an amine compound are reacted in a solid state in the presence of an acidic compound. The term "solid state" as used herein is intended to mean that the reaction proceeds while the reaction system seemingly maintains the state of a solid phase. When seen microscopically, the reaction system may contain a liquid phase.

The molecular weight of the amine-modified polyaspartic acid or a salt thereof according to the present invention is not particularly limited and can be selected appropriately depending on the use, usually ranging from 1,000 to 500,000, preferably 6,000 to 150,000, still preferably 8,000 to 100,000. The term "molecular weight" as used herein denotes a polyethylene glycol-converted weight average molecular weight as measured by gel-permeation chromatography.

The amine-modified polyaspartic acid or a salt thereof of the present invention is characterized by high calcium ion chelating ability as measured by a calcium ion electrode method. It preferably has a calcium ion chelating ability exceeding 5.0 ($Ca^{++}$g/100 g-polymer), particularly 5.3 ($Ca^{++}$g/100 g-polymer) or higher. By virtue of this characteristic, the amine-modified polyaspartic acid or a salt thereof is particularly useful as a chelating agent for sequestering a metallic ion, such as a calcium ion.

The calcium ion chelating ability can be measured by dissolving a sample in an aqueous solution of calcium chloride and potassium chloride by stirring, and determining the amount of calcium ion in the solution with an ion meter equipped with a calcium ion electrode in accordance with the description of JP-A-5-59130 and Yukagaku, Vol. 35, No. 3 (1986). More specifically, 50 ml of an aqueous solution containing $1.0 \times 10^{-3}$ M calcium chloride and 0.08 M potassium chloride is put into a 50 ml beaker, and a sample weighing 10 mg is dissolved in the solution by stirring at 30°C for about 10 minutes. The calcium ion in the solution is determined with an ion meter (Model 720A, manufactured by Orion K.K.) equipped with a calcium electrode (Model 93-20, manufactured by Orion K.K.) to calculate the number of grams of calcium ion sequestered by 100 g of the sample polymer ($Ca^{++}$g/100 g-polymer). The calcium ion chelating ability can also be measured by a dye method, a turbidity method, etc.

The amine-modified polyaspartic acid or a salt thereof according to the present invention is also characterized by high moisture retention. It preferably has a moisture absorption of 1 to 27% and a moisture retention of 29% or more, particularly a moisture absorption of 5 to 25% and a moisture retention of 30% or more, as measured by a moisture absorption and retention test hereinafter described. By virtue of this characteristic, the amine-modified polyaspartic acid or a salt thereof of the present invention is particularly useful as a humectant in the field of cosmetics, etc.

The test for measuring the moisture absorbing and retaining properties can be carried out in accordance with the description of JP-A-6-157237 and Fragrance Journal, Vol. 12, p. 47 (1996). More specifically, a sample is thoroughly dried in a desiccator containing diphosphorus pentoxide until a constant weight is reached. The dried sample precisely weighing about 0.5 g is allowed to stand in a thermostat kept at 25°C and 65% RH (relative humidity) for 7 days and then weighed. The sample was further allowed to stand in a thermostat kept at 25°C and 35% RH for 7 days and weighed again. The moisture retention is expressed in terms of a weight percentage of the water content after the standing at 25°C and 35% RH based on the water content after the standing at 25°C and 65% RH. The moisture absorption is expressed in terms of a weight percentage of the water content after the standing at 25°C and 35% RH based on the dry weight of the sample.

The aspartic acid used in the practice of the present invention can be any of L-, D- or DL-aspartic acid and their metal salts. If desired, the aspartic acid can be used in combination with a polyfunctional compound copolymerizable with aspartic acid in an amount of not more than 50 mol% based on the aspartic acid. Such a copolymerizable polyfunctional compound mainly includes glycolic acid, lactic acid, and a hydroxycarboxylic acid, such as 3-hydroxypropionic acid. Glycols, e.g., ethylene glycol, and dicarboxylic acids, such as maleic acid, can also be used as a polyfunctional compound.

The polysuccinimide used in the practice of the present invention is not limited by the process for preparation. For example, a reaction product obtained by reacting maleic acid, maleic anhydride or a maleic ester with ammonia according to the method described, e.g., in German Patent 3,626,672 and U.S. Patents 4,839,461 and 5,286,810 can be used. Containing various impurities besides polysuccinimide, the reaction product can be purified, if desired.

It is preferable to use polysuccinimide obtained by polycondensating aspartic acid under heating. The aspartic acid to be polycondensated can be any of D-, L- or DL-aspartic acid and their metal salts. The polysuccinimide can be a copolymer containing not more than 50 mol% of a polyfunctional compound. Such a polyfunctional compound mainly includes an amino acid, e.g., alanine, leucine, lysine, and glutamic acid, glycolic acid, lactic acid, and a hydroxycarboxylic acid, e.g., 3-hydroxypropionic acid. A glycol, e.g., ethylene glycol, or a dicarboxylic acid, e.g., maleic acid, can be used as well.

The molecular weight of the polysuccinimide to be used is selected appropriately according to the use of the amine-modified polyaspartic acid, usually ranging from 1,000 to 500,000, preferably from 6,000 to 150,000, still preferably from 8,000 to 100,000. The term "molecular weight" as used for the polysuccinimide is a weight average molecular weight as measured by gel-permeation chromatography on polystyrene conversion.

The starting material to be amine-modified in the process of the present invention can be aspartic acid or polysuccinimide alone or a combination thereof, depending on the purpose.

The amine compound having a primary or secondary amino group can be any of monoamines and polyamines, such as diamines. The amine compound may have other functional groups than the primary or secondary amino group. Illustrative examples of suitable amine compounds are primary alkylamines, such as propylamine, laurylamine, and stearylamine; secondary alkylamines, such as dibutylamine; hydroxyl-containing amines, such as ethanolamine, propanolamine, and 3-amino-1,2-propanediol; tertiary amino-containing amines, such as N,N-diethyl-1,3-propanediamine, N,N-dimethyl-1,3-propanediamine, 2-amino-5-diethylaminopentane, and N,N-dibutyl-1,3-propanediamine; amino acids, such as alanine, leucine, lysine, and glutamic acid; and sulfo-containing amines, such as taurine, N-methyltaurine, aminobenzenesulfonic acid, and a metal salt thereof. Preferred of these amine compounds are those having a highly reactive primary amino group. From the standpoint of the chelating ability of the resulting amine-modified product, diamino compounds having, in addition to the amino group participating in the modification reaction, a dialkylamino group in which alkyl groups having 1 to 6 carbon atoms are bonded to the nitrogen atom are particularly preferred.

The amine compound is preferably used in an amount of 0.001 to 0.3 times the total molar quantity of the aspartic acid and the imide ring of the polysuccinimide. If the amount of the amino compound is less than that, it naturally follows that the resulting amine-modified polyaspartic acid has an insufficient degree of amine modification for exhibiting expected performance. If the amino compound is used in a larger amount, the reaction system tends to become sticky to form lumps, which causes a great burden in stirring or makes it difficult to keep the reaction system in a solid state. Where aspartic acid alone is used as a starting material, there is a tendency that the two carboxyl groups of aspartic acid are blocked by the compound having an amino group, and as a result the polymerization reaction is suspended, failing to provide amine-modified polyaspartic acid having a sufficiently high molecular weight. A still preferred amount of the amine compound is 0.02 to 0.25 times the total molar quantity of the aspartic acid and the imide ring of the polysuccinimide.

Where polysuccinimide is used alone as a starting material, a modification reaction takes place. Where aspartic acid is used, both a polymerization reaction and a modification reaction occur simultaneously. In the latter case, therefore, the acidic compound also acts as a polymerization catalyst, and condensed water is by-produced in the reaction system.

The acidic compound used in the present invention usually includes inorganic proton acids, such as hydrochloric acid, sulfuric acid, phosphoric acid, and condensed phosphoric acid. Where aspartic acid is used alone, phosphorus pentoxide is also useful. It is considered that phosphorus pentoxide reacts with water by-produced through polymerization reaction and is converted to phosphoric acid. Other usable acidic compounds include hydrogenphosphates, such as tin hydrogenphosphate, zinc hydrogenphosphate, calcium hydrogenphosphate, sodium hydrogenphosphate, and potassium hydrogenphosphate; phosphorous acid; phosphorous acid esters, such as triesters, e.g., triethyl phosphite and triphenyl phosphite, diesters, e.g., diphenyl phosphite, dilauryl phosphite, and dioleyl phosphite, and monoesters, e.g., phenyl phosphite, methyl phosphite, and isopropyl phosphite; and phosphorus acid salts. Organic acids which can be used as an acidic compound include sulfonic acids, such as p-toluenesulfonic acid, methanesulfonic acid, and trifluoromethanesulfonic acid; and haloacetic acids, such as monochloroacetic acid, trichloroacetic acid, and trifluoroacetic acid. Preferred acidic compounds are phosphoric acid, hydrogenphosphates, and phosphorous acid esters. Use of these preferred acidic compounds generally provides an amine-modified polysuccinimide in a sufficiently high yield. Of the phosphorus acid esters or salts, a phosphorus triester, particularly triphenyl phosphite, is preferred from the standpoint of the molecular weight of the produced polymer and the reaction rate.

The amount (X) of the acidic compound to be used is represented by the following formula:

$$X = A \times \text{(the number of the moles of the starting aspartic acid)} + B \times \text{(the number of the amino groups}$$
$$\text{of the amine compound having a primary or secondary amino group)}$$

In the above formula, A is preferably 0.001 to 0.3, more preferably 0.02 to 0.25, most preferably 0.02 to 0.25; and B is preferably 0.5 to 3.0, more preferably 0.8 to 2.5, most preferably 1.0 to 2.0.

If the amount of the acidic compound is lower than the above range, the reaction tends to be slow, and the reaction system is to be exposed to a high temperature for an extended period of time so that the resulting product tends to have deteriorated quality. If the amount is higher than the above range, the reactants tend to become sticky to form masses, which causes a great burden in stirring or makes it difficult to keep the reaction system in a solid state.

It is desirable that the aspartic acid and/or polysuccinimide, amine compound, acidic compound, and, if used, the copolymerizable compound be previously mixed thoroughly and fed to a reactor in the form of a uniform mixture, whereby the modification reaction proceeds satisfactorily. If these components are fed to a reactor in a non-uniform state, the reactants tend to partly melt in the reactor to form masses. The order of mixing the components is arbitrary.

For example, aspartic acid and/or polysuccinimide and the amine compound are mixed first, and the acidic compound is added thereto, or all of the aspartic acid and/or polysuccinimide, amine compound and acidic compound are mixed simultaneously. If desired, the amine compound and acidic compound are mixed previously, and the mixture is then mixed with aspartic acid and/or polysuccinimide. The apparatus to be used for mixing is not limited and selected from a mill, a Henschel mixer, a blender, a kneader, and the like.

The modification reaction is carried out at 50 to 300°C. If the reaction temperature is too low, the reaction is markedly retarded. If it is too high, the reaction tends to be accompanied by thermal decomposition or melting. A suitable reaction temperature ranges from 100 to 260°C. The reaction time should be within 10 hours. Exposure of the reactants to a high temperature for a long time tends to produce a thermally modified product. A suitable reaction time is within 4 hours, particularly within 3 hours, also from the viewpoint of productivity.

The reaction can be conducted either in a batch system or a continuous system. The reaction is preferably carried out while stirring by using a reactor equipped with a stirring means, such as a stirring tank or a mixing machine. A horizontal stirrer equipped with two-axis stirring blades is particularly preferred. Commercially available stirrers of this type include "Bivolak" manufactured by Sumitomo Heavy Industries, Ltd., "SCR" manufactured by Mitsubishi Heavy Industries, Ltd., "TEX" manufactured by The Japan Steel Works, Ltd., "TEM" manufactured by Toshiba Machine Co., Ltd., "FCM" manufactured by Kobe Steel, Ltd., and "KRC Kneader" manufactured by Kurimoto, Ltd. By use of these stirrers, a polymerization reaction can be continued while substantially maintaining a solid state as a whole even if the reaction system partly assumes a viscous state.

Accompanied by production of water, the modification reaction of aspartic acid is preferably carried out under reduced pressure or in an inert gas stream so that the water produced may be driven out of the system rapidly.

Where aspartic acid is used as a sole starting material without using the plysuccinimide, there is obtained amine-modified polysuccinimide through one stage, which is advantageous both economically and industrially. Where polysuccinimide is used as a major starting material, amine-modified polysuccinimide having a variety of molecular weights can easily be obtained by selecting the molecular weight of the starting polysuccinimide because the molecular weight of the starting polysuccinimide can be retained through the modification reaction.

The reaction product containing the thus produced amine-modified polysuccinimide is then subjected to hydrolysis of the imide ring to obtain an amine-modified polyaspartic acid. The hydrolysis can be performed in a conventional manner by referring to, for example, J. Am. Chem. Soc., Vol. 80, p. 3361 (1958), J. Org. Chem., Vol. 26, p. 1084 (1961), U.S. Patents 5,221,733 and 5,288,783, and JP-A-60-203636. In a preferred embodiment of the hydrolysis, 50 to 1000 parts by weight of water is added to 100 parts by weight of the reaction product, and an alkali metal hydroxide is added thereto in an amount sufficient for neutralizing the polymerization catalyst in the reaction product and also ranging from 1 to 3 mols per mole of the imide rings, followed by allowing the mixture to react at 0 to 50°C for 10 minutes to 8 hours, whereby the most of the imide rings are opened.

The resulting hydrolysis product is an alkali metal salt of the amine-modified polyaspartic acid, which also comes under the scope of the present invention. The polyaspartic acid in the form of an alkali metal salt can be converted to its free form by the action of an acid. The ratio of the free form to the salt form of the polyaspartic acid can be controlled arbitrarily by adjusting the amount of the acid.

The present invention will now be illustrated in greater detail with reference to Examples, but it should be understood that the present invention is not construed as being limited thereto.

In Examples, the conversion of aspartic acid to polymer, the weight-average molecular weight of polysuccinimide and amine-modified polyaspartic acid, and the rate of amine modification were determined as follows.

The calcium ion chelating ability and moisture absorption and retention of the polymer obtained in Examples were measured by the above-described methods.

1) Conversion to Polymer:

The amount of residual aspartic acid in amine-modified polysuccinimide was calculated based on the results of liquid chromatography.

2) Weight Average Molecular Weight of Polysuccinimide:

Polystyrene-converted value as obtained by gel-permeation chromatography using a differential refractometer.

Column: Two MIXED-C columns packed with PLgel (5 $\mu$m), produced by Polymer Lab.
Eluent: Dimethylformamide containing 20 mM LiBr.

3) Weight Average Molecular Weight of Amine-modified Sodium Polyaspartate:

Polyethylene glycol-converted value as obtained by gel-permeation chromatography using a differential refractometer.

Column: TSKgel G 6000 PWXL + TSK gel G 3000 PWXL (produced by Tosoh Corp.)
Eluent: 0.4M sodium nitrate aqueous solution

4) Rate of Amine Introduction:

The amine in amine-modified polyaspartic acid was determined by $^1$H-NMR, and the number of the amino groups per unit aspartic acid was taken as a rate of amine introduction.

Preparation of Polysuccinimide (A):

L-Aspartic acid powder (5.0 kg) and 500 g of 85% phosphoric acid were mixed in Super Mixer (manufactured by Kawata K.K.) in a nitrogen atmosphere for 5 minutes to obtain a uniform powder mixture.

The mixture was continuously fed to KRC Kneader (manufactured by Kurimoto, Ltd.; diameter: 50 mm; length: 661.5 mm) to conduct polymerization. The kneader was operated under conditions of a heating medium temperature of 260°C, a number of screw rotation of 30 rpm, and an average retention time of 16 minutes. The resulting product was brown powder having a weight average molecular weight of 17,000.

Preparation of Polysuccinimide (B):

In a 200 ml four-necked flask equipped with a condenser, a thermometer, a stirrer, and a water separator were charged 25 g of aspartic acid, 2.5 g of 85% phosphoric acid, 56 g of mesitylene, and 24 g of sulfolane. The mixture was heated under normal pressure at a refluxing temperature of mesitylene (162°C) for 4.5 hours to conduct polymerization. Water produced was evaporated out of the system together with mesitylene.

After completion of the reaction, the reaction mixture was filtered. The filter cake was washed successively with four 100 g portions of pure water and 100 g of methanol and dried at 80°C under reduced pressure for 24 hours to give 17.9 g of yellowish white powder. The product was found to have a weight average molecular weight of 66,000.

EXAMPLE 1

L-Aspartic acid powder (1.0 kg), 100 g of 85% phosphoric acid, and 110.5 g of taurine sodium salt powder were mixed in Super Mixer for 5 minutes to prepare a uniform mixture.

The mixture was continuously fed to KRC Kneader to conduct polymerization. The kneader was operated under conditions of a heating medium temperature of 260°C, a number of screw rotation of 30 rpm, and an average retention time of 20 minutes. The conversion to polymer was 98.0%.

Eight grams of water and 0.92 g of sodium hydroxide (purity of 93% or more) were charged in a 50 cc beaker equipped with a stirrer. To the solution was added 2.0 g of the above-prepared pale brown product in small portions while cooling with ice, followed by stirring at room temperature for 1 hour to carry out hydrolysis.

The reaction mixture was added dropwise to 100 ml of methanol to obtain 2.6 g of amine-modified sodium polyaspartate as a yellowish white precipitate. The resulting amine-modified sodium polyaspartate had a weight average molecular weight of 8,600, a rate of taurine incorporation of 9.8%, a calcium ion chelating ability of 6.4 ($Ca^{++}$g/100 g-polymer), a moisture absorption of 16.9%, and a moisture retention of 36.4%.

EXAMPLE 2

Amine-modified sodium polyaspartate was prepared in the same manner as in Example 1, except for replacing taurine sodium salt with 138.5 g of laurylamine. The conversion to polymer was 99% or higher. The polymerization product was pale brown. The resulting amine-modified sodium polyaspartate was yellowish white, and the yield was 2.5 g. The amine-modified sodium polyaspartate had a weight average molecular weight of 12,000, a rate of laurlamine introduction of 9.6%, a calcium ion chelating ability of 6.1 ($Ca^{++}$g/100 g-polymer), a moisture absorption of 13.1%, and a moisture retention of 32.6%.

EXAMPLE 3

L-Aspartic acid powder (40 g), 4 g of 85% phosphoric acid, and 2.0 g of taurine sodium salt were put in a mixer (Oster Blender) and mixed at room temperature for 15 minutes to obtain a uniform mixture. The mixture was stirred in Lab Plastomill (manufactured by Toyo Seiki Seisakusho K.K.) at 230°C for 30 minutes to obtain pale brown powder. The conversion to polymer was 99% or higher.

In a 50 cc beaker equipped with a stirrer were charged 0.46 g of sodium hydroxide (purity of 93% or more) and 4 g of water, and 1.0 g of the above product was added thereto in small portions while cooling with ice, followed by stirring at room temperature for 1 hour to conduct hydrolysis. The hydrolysis reaction mixture was added to 100 ml of methanol dropwise to obtain 1.2 g of a precipitate of amine-modified sodium polyaspartate. The resulting amine-modified sodium polyaspartate had a weight average molecular weight of 11,000, a rate of taurine introduction of 4.8%, a calcium ion chelating ability of 5.9 (Ca$^{++}$g/100 g-polymer), a moisture absorption of 16.8%, and a moisture retention of 31.4%.

EXAMPLE 4

L-Aspartic acid powder (40 g), 4 g of 85% phosphoric acid, and 2.0 g of taurine sodium salt were put in a mixer (Oster Blender) and mixed at room temperature for 15 minutes to obtain a uniform mixture. The mixture was stirred in Lab Plastomill at 200°C for 30 minutes to obtain pale brown powder. The conversion to polymer was 93.0%.

In a 50 cc beaker equipped with a stirrer were charged 0.46 g of sodium hydroxide (purity of 93% or more) and 4 g of water, and 1.0 g of the above product was added thereto in small portions while cooling with ice, followed by stirring at room temperature for 1 hour to conduct hydrolysis. The hydrolysis reaction mixture was added to 100 ml of methanol dropwise to obtain 1.1 g of a precipitate of amine-modified sodium polyaspartate. The resulting amine-modified sodium polyaspartate had a weight average molecular weight of 10,000, a rate of taurine introduction of 4.3%, a calcium ion chelating ability of 5.6 (Ca$^{++}$g/100 g-polymer), a moisture absorption of 16.8%, and a moisture retention of 30.2%.

EXAMPLE 5

L-Aspartic acid powder (40 g), 4 g of 85% phosphoric acid, and 1.8 g of ethanolamine were put in a mixer (Oster Blender) and mixed at room temperature for 15 minutes to obtain a uniform mixture. The mixture was stirred in Lab Plastomill at 230°C for 30 minutes to obtain pale brown powder. The conversion to polymer was 99% or higher.

In a 50 cc beaker equipped with a stirrer were charged 0.46 g of sodium hydroxide (purity of 93% or more) and 4 g of water, and 1.0 g of the above product was added thereto in small portions while cooling with ice, followed by stirring at room temperature for 1 hour to conduct hydrolysis. The hydrolysis reaction mixture was added to 100 ml of methanol dropwise to obtain 1.2 g of a precipitate of amine-modified sodium polyaspartate. The resulting amine-modified sodium polyaspartate had a weight average molecular weight of 11,000, a rate of ethanolamine introduction of 4.6%, a calcium ion chelating ability of 6.2 (Ca$^{++}$g/100 g-polymer), a moisture absorption of 13.0%, and a moisture retention of 32.1%.

EXAMPLE 6

L-Aspartic acid powder (40 g), 4 g of 85% phosphoric acid, and 3.3 g of taurine were put in a mixer (Oster Blender) and mixed at room temperature for 15 minutes to obtain a uniform mixture. The mixture was stirred in Lab Plastomill at 230°C for 30 minutes to obtain pale brown powder. The conversion to polymer was 99% or higher.

In a 50 cc beaker equipped with a stirrer were charged 0.46 g of sodium hydroxide (purity of 93% or more) and 4 g of water, and 1.0 g of the above product was added thereto in small portions while cooling with ice, followed by stirring at room temperature for 1 hour to conduct hydrolysis. The hydrolysis reaction mixture was added to 100 ml of methanol dropwise to obtain 1.2 g of a precipitate of amine-modified sodium polyaspartate. The resulting amine-modified sodium polyaspartate had a weight average molecular weight of 8,900, a rate of taurine introduction of 9.6%, a calcium ion chelating ability of 6.5 (Ca$^{++}$g/100 g-polymer), a moisture absorption of 17.0%, and a moisture retention of 36.5%.

EXAMPLE 7

Polysuccinimide (A) (1.0 kg), 118.9 g of 85% phosphoric acid, and 151.4 g of taurine sodium salt were mixed in Super Mixer for 5 minutes in a nitrogen gas atmosphere to obtain a uniform powder mixture.

The mixture was continuously fed to KRC Kneader to conduct modification to obtain amine-modified polysuccinimide as pale brown powder. The kneader was operated under conditions of a heating medium temperature of 200°C, a number of screw rotation of 30 rpm, and an average retention time of 20 minutes.

In a 50 cc beaker equipped with a stirrer were charged 0.92 g of sodium hydroxide (purity of 93% or more) and 8 g of water, and 2.0 g of the above-obtained amine-modified polysuccinimide was added thereto in small portions while cooling with ice, followed by stirring at room temperature for 1 hour to conduct hydrolysis. The hydrolysis reaction mixture was added to 100 ml of methanol dropwise to obtain 2.5 g of amine-modified sodium polyaspartate as a yellowish white precipitate. The resulting amine-modified sodium polyaspartate had a weight average molecular weight of 12,000, a rate of amine introduction of 8.6%, a calcium ion chelating ability of 5.9 ($Ca^{++}$g/100 g-polymer), a moisture absorption of 15.9%, and a moisture retention of 29.8%.

EXAMPLE 8

Polysuccinimide (A) (35 g), 4.15 g of 85% phosphoric acid, and 5.30 g of taurine sodium salt were mixed in Oster Blender at room temperature for 15 minutes to obtain a uniform powder mixture.

The mixture was put in Labo Plastomill and stirred at 230°C for 30 minutes to obtain pale brown powder.

The resulting powder (2.0 g) was hydrolyzed and worked-up in the same manner as in Example 7 to obtain 2.6 g of yellowish white amine-modified sodium polyaspartate. The resulting amine-modified sodium polyaspartate had a weight average molecular weight of 16,000, a rate of amine introduction of 4.9%, a calcium ion chelating ability of 5.5 ($Ca^{++}$g/100 g-polymer), a moisture absorption of 15.6%, and a moisture retention of 29.6%.

EXAMPLE 9

In a 50 ml beaker were charged 1.40 g of potassium dihydrogenphosphate and 3 g of water, and 1.52 g of taurine sodium salt was added thereto under cooling with ice. The resulting solution and 10 g of polysuccinimide (A) were mixed in Oster Blender at room temperature for 15 minutes to prepare a uniform powder mixture.

The mixture was subjected to modification reaction in the same manner as in Example 8 to obtain pale brown powder.

The resulting powder (2.0 g) was hydrolyzed and worked-up in the same manner as in Example 7 to obtain 2.8 g of yellowish white amine-modified sodium polyaspartate. The resulting amine-modified sodium polyaspartate had a weight average molecular weight of 17,000, a rate of amine introduction of 6.4%, a calcium ion chelating ability of 6.2 ($Ca^{++}$g/100 g-polymer), a moisture absorption of 16.2%, and a moisture retention of 36.4%.

EXAMPLE 10

In a 50 ml beaker were charged 4.15 g of 85% phosphoric acid and 3 g of water, and 2.2 g of ethanolamine was added thereto under cooling with ice. The resulting solution and 35 g of polysuccinimide (A) were mixed in Oster Blender at room temperature for 15 minutes to prepare a uniform powder mixture.

The mixture was subjected to modification reaction in the same manner as in Example 8 to obtain pale brown powder.

The resulting powder (2.0 g) was hydrolyzed and worked-up in the same manner as in Example 7 to obtain 2.6 g of yellowish white amine-modified sodium polyaspartate. The resulting amine-modified sodium polyaspartate had a weight average molecular weight of 17,000, a rate of amine introduction of 6.6%, a calcium ion chelating ability of 6.0 ($Ca^{++}$g/100 g-polymer), a moisture absorption of 13.2%, and a moisture retention of 32.9%.

EXAMPLE 11

Polysuccinimide (B) (35 g), 4.15 g of 85% phosphoric acid, and 5.30 g of taurine sodium salt were mixed in Oster Blender at room temperature for 15 minutes to prepare a uniform powder mixture.

The mixture was subjected to modification reaction in the same manner as in Example 8 to obtain pale brown powder.

The resulting powder (2.0 g) was hydrolyzed and worked-up in the same manner as in Example 7 to obtain 2.6 g of yellowish white amine-modified sodium polyaspartate. The resulting amine-modified sodium polyaspartate had a weight average molecular weight of 58,000, a rate of amine introduction of 7.2%, a calcium ion chelating ability of 6.0 ($Ca^{++}$g/100 g-polymer), a moisture absorption of 16.1%, and a moisture retention of 32.1%.

EXAMPLE 12

In a 50 ml beaker were charged 1.61 g of sodium dihydrogenphosphate dihydrate and 3 g of water, and 0.63 g of ethanolamine was added thereto under cooling with ice. The resulting solution and 10 g of polysuccinimide (A) were mixed in Oster Blender at room temperature for 15 minutes to prepare a uniform powder mixture.

The mixture was subjected to modification reaction in the same manner as in Example 8 to obtain pale brown powder.

The resulting powder (2.0 g) was hydrolyzed and worked-up in the same manner as in Example 7 to obtain 2.6 g of yellowish white amine-modified sodium polyaspartate. The resulting amine-modified sodium polyaspartate had a weight average molecular weight of 17,000, a rate of amine introduction of 8.0%, a calcium ion chelating ability of 6.5 ($Ca^{++}$g/100 g-polymer), a moisture absorption of 13.9%, and a moisture retention of 33.9%.

COMPARATIVE EXAMPLE 1

The operation of Example 3 was repeated, except that phosphoric acid was not used. However, when about 5 minutes elapsed, the reaction mixture turned black brown and could not be stirred any more so that the reaction was stopped.

COMPARATIVE EXAMPLE 2

In a 50 cc beaker equipped with a stirrer were charged 10 g of water and 1.4 g of sodium hydroxide (purity of 93% or more). Polysuccinimide (A) (3.0 g) was added to the solution in small portions under ice-cooling, followed by stirring at room temperature for 1 hour to carry out hydrolysis.

The hydrolysis reaction mixture was added to 100 ml of methanol dropwise to obtain 2.6 g of yellowish white sodium polyaspartate. The resulting sodium polyaspartate had a weight average molecular weight of 17,000, a calcium ion chelating ability of 5.0 ($Ca^{++}$g/100 g-polymer), a moisture absorption of 11.5%, and a moisture retention of 28.9%.

COMPARATIVE EXAMPLE 3

In a 500 ml four-necked flask equipped with a condenser, a thermometer, a stirrer, and a water separator was charged 200 g of aspartic acid and caused to condense by heating on an oil bath kept at 265°C for 6 hours in a nitrogen stream to obtain 132.2 g of polysuccinimide as brown powder in a yield of 92%. The resulting polysuccinimide had a weight average molecular weight of 12,000.

In a 50 cc beaker equipped with a stirrer were charged 10 g of water and 1.4 g of sodium hydroxide (purity of 93% or more). The above-obtained polysuccinimide (3.0 g) was added to the solution in small portions under ice-cooling, followed by stirring at room temperature for 1 hour to carry out hydrolysis.

The hydrolysis reaction mixture was added to 100 ml of methanol dropwise to obtain 2.4 g of yellowish white sodium polyaspartate. The resulting sodium polyaspartate had a weight average molecular weight of 11,000, a calcium ion chelating ability of 4.2 ($Ca^{++}$g/100 g-polymer), a moisture absorption of 11.3%, and a moisture retention of 28.5%.

COMPARATIVE EXAMPLE 4

In a 2 ℓ egg-plant flask were charged 188 g of polysuccinimide (A) and 800 g of N,N-dimethylformamide to dissolve the polysuccinimide. To the solution was added 28.4 g of taurine sodium salt, and the flask was set in a rotary evaporator having a bath temperature of 150°C to heat the mixture for 3 hours. After completion of the reaction, the reaction mixture was added to 10 ℓ of methanol dropwise to precipitate a polymer. The polymer was collected by filtration, washed with two 4 ℓ portions of methanol, and dried at 100°C under reduced pressure for 24 hours to obtain 186 g of a brown solid.

In a 2 ℓ beaker were charged 76.6 g of 93% sodium hydroxide and 1,038 g of ion-exchanged water to dissolve the sodium hydroxide. After the beaker was cooled with ice-water, 180 g of the above-prepared brown solid was added thereto in small portions, followed by stirring at room temperature for 1 hour. After completion of the reaction, the reaction mixture (618 g) was added dropwise to 5 ℓ of methanol to precipitate a polymer produced. The polymer was collected by filtration, washed with two 2 ℓ portions of methanol, and dried at 50°C for 24 hours under reduced pressure to obtain 108 g of amine-modified sodium polyaspartate as a yellowish white solid. The resulting amine-modified sodium polyaspartate had a weight average molecular weight of 3,800, a rate of amine introduction of 12.6%, a calcium ion chelating ability of 3.7 ($Ca^{++}$g/100 g-polymer), a moisture absorption of 16.9%, and a moisture retention of 29.7%.

While the invention has been described in detail and with reference to specific examples thereof, it will be apparent to one skilled in the art that various changes and modifications can be made therein without departing from the spirit and scope thereof.

**Claims**

1. An amine-modified polyaspartic acid or a salt thereof which is obtained by causing a mixture comprising aspartic acid and/or polysuccinimide, an amine compound having a primary or secondary amino group, and an acidic compound to react while maintaining the mixture in a solid state to obtain an amine-modified polysuccinimide, and hydrolyzing the amine-modified polysuccinimide.

2. The amine-modified polyaspartic acid or a salt thereof according to claim 1, which has a calcium ion chelating ability exceeding 5.0 ($Ca^{++}$g/100 g-polymer) as measured by a calcium ion electrode method using calcium chloride.

3. A chelating agent comprising an amine-modified polyaspartic acid or a salt thereof having a calcium ion chelating ability exceeding 5.0 ($Ca^{++}$g/100 g-polymer) as measured by a calcium ion electrode method using calcium chloride, said amine-modified polyaspartic acid or a salt thereof being obtained by causing a mixture comprising aspartic acid and/or polysuccinimide, an amine compound having a primary or secondary amino group, and an acidic compound to react while maintaining the mixture in a solid state to obtain an amine-modified polysuccinimide and hydrolyzing the amine-modified polysuccinimide.

4. The amine-modified polyaspartic acid or a salt thereof according to claim 1, which has a moisture absorption of 1 to 27% and a moisture retention of more than 29%.

5. A humectant comprising an amine-modified polyaspartic acid or a salt thereof having a moisture absorption of 1 to 27% and a moisture retention of more than 29%, said amine-modified polyaspartic acid or a salt thereof being obtained by causing a mixture comprising aspartic acid and/or polysuccinimide, an amine compound having a primary or secondary amino group, and an acidic compound to react while maintaining the mixture in a solid state to obtain an amine-modified polysuccinimide and hydrolyzing the amine-modified polysuccinimide.

6. A process for preparing an amine-modified polyaspartic acid or a salt thereof comprising causing a mixture comprising aspartic acid and/or polysuccinimide, an amine compound having a primary or secondary amino group, and an acidic compound to react while maintaining the mixture in a solid state to obtain amine-modified polysuccinimide and hydrolyzing the amine-modified polysuccinimide.

7. The process for preparing amine-modified polyaspartic acid or a salt thereof according to claim 6, wherein said amine compound is used in an amount of 0.001 to 0.3 times the total molar quantity of said aspartic acid and the imide ring of said polysuccinimide.

8. The process for preparing amine-modified polyaspartic acid or a salt thereof according to claim 6, wherein said acidic compound is a proton acid selected from inorganic acids, sulfonic acids, and haloacetic acids.

9. The process for preparing amine-modified polyaspartic acid or a salt thereof according to claim 6, wherein said acidic compound is selected from phosphoric acid and hydrogenphosphates.

10. The process for preparing amine-modified polyaspartic acid or a salt thereof according to claim 6, wherein said acidic compound is selected from phosphorous acid and esters and salts thereof.

11. The process for preparing amine-modified polyaspartic acid or a salt thereof according to claim 6, wherein said acidic compound is used in an amount represented by (0.001 to 0.3) x (the number of the moles of the starting aspartic acid) + (0.5 to 3.0) x (the number of the amino groups of the amine compound having a primary or secondary amino group).

12. The process for preparing amine-modified polyaspartic acid or a salt thereof according to claim 6, wherein said polysuccinimide is a copolymer containing not more than 50 mol% of a polyfunctional compound.

13. The process for preparing amine-modified polyaspartic acid or a salt thereof according to claim 6, wherein the reaction is carried out in a horizontal stirrer equipped with a two-axis stirring blade.

14. The process for preparing amine-modified polyaspartic acid or a salt thereof according to claim 6, wherein said mixture further contains a polyfunctional compound copolymerizable with aspartic acid in an amount of not more than 0.5 mol per mole of said aspartic acid.